(19) Europäisches Patentamt
European Patent Office
Office européen des brevets

(11) **EP 3 487 712 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **17749604.9**

(22) Anmeldetag: **19.07.2017**

(51) Int Cl.:
**B42D 25/46** *(2014.01)*

(86) Internationale Anmeldenummer:
**PCT/EP2017/000879**

(87) Internationale Veröffentlichungsnummer:
**WO 2018/015016 (25.01.2018 Gazette 2018/04)**

(54) **SICHERHEITSMERKMAL UND WERTDOKUMENT**

SECURITY FEATURE AND DOCUMENT OF VALUE

SIGNE DE SÉCURITÉ ET DOCUMENT DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2016 DE 102016008804**

(43) Veröffentlichungstag der Anmeldung:
**29.05.2019 Patentblatt 2019/22**

(73) Patentinhaber: **Giesecke+Devrient Currency Technology GmbH**
**81677 München (DE)**

(72) Erfinder: **KECHT, Johann**
**81677 München (DE)**

(56) Entgegenhaltungen:
EP-A1- 2 172 812          DE-A1-102014 011 383
US-A1- 2014 093 664

**Beschreibung**

Die Erfindung betrifft ein Sicherheitsmerkmal zur Absicherung von Wertdokumenten, umfassend einen chemisch instabilen anorganischen Merkmalsstoff und einen den Merkmalsstoff stabilisierenden Stoff. Die Erfindung betrifft des Weiteren ein das Sicherheitsmerkmal aufweisendes Wertdokument. Im Stand der Technik sind zahlreiche Möglichkeiten für den Schutz instabiler anorganischer Merkmalsstoffe beschrieben. Aus der DE 102004063217 A1 und der DE 102009056634 A1 ist die Beschichtung des instabilen anorganischen Merkmalsstoffs mit einer stabilisierenden Hülle bekannt. Der zusätzliche Verfahrensschritt des Umhüllens ist jedoch technisch aufwändig und ist nicht auf alle Merkmalsstoffe anwendbar. Beispielsweise kann auf diese Weise kein Schutz für Merkmalsstoffe erhalten werden, die durch den Beschichtungsprozess vernichtet werden.

Des Weiteren sind Merkmalsstoffe auf Basis von instabilen anorganischen Lumineszenzstoffen und deren Schutz durch dreidimensional vernetzte Kleberschichten in Wertdokumenten beispielsweise aus der Schrift DE 102014011383 A1, die ein Sicherheitsmerkmal nach dem Oberbegriff des Anspruchs 1 beschreibt, bekannt. Auch hierbei erfolgt der Schutz jedoch durch eine Art Umhüllung.

Der Erfindung liegt die Aufgabe zugrunde, ein verbessertes Sicherheitsmerkmal zur Absicherung von Wertdokumenten und ein mit einem solchen Sicherheitsmerkmal versehenes Wertdokument bereitzustellen.

Diese Aufgabe wird durch die in den Hauptansprüchen definierten Merkmalskombinationen gelöst. Bevorzugte Ausführungsformen sind Gegenstand der Unteransprüche.

Zusammenfassung der Erfindung

1. (Erster Aspekt der Erfindung) Sicherheitsmerkmal zur Absicherung von Wertdokumenten, umfassend einen chemisch instabilen anorganischen Merkmalsstoff und eine stabilisierende Komponente umfassend einen den Merkmalsstoff stabilisierenden Stoff, der mindestens die gleiche Löslichkeit in Wasser wie der zu schützende Merkmalsstoff besitzt und bei seiner Zersetzung Ionen freigibt, die mindestens zum Teil mit den Ionen des Merkmalsstoffs übereinstimmen.

Bevorzugt wird für die stabilisierende Komponente nur ein den Merkmalsstoff stabilisierender Stoff verwendet. In diesem Fall sind stabilisierende Komponente und stabilisierender Stoff identisch. In alternativen Ausführungsformen wird ein Gemisch unterschiedlicher Stoffe als stabilisierende Komponente verwendet.

2. (Bevorzugte Ausgestaltung) Sicherheitsmerkmal nach Absatz 1, wobei der den Merkmalsstoff stabilisierende Stoff ein aus Kationen und Anionen aufgebautes Salz (d.h. eine ionische Verbindung), bevorzugt ein anorganisches Salz ist.

In einer bevorzugten Ausführungsform unterscheidet sich der den Merkmalsstoff stabilisierenden Stoff von dem Merkmalsstoff in seiner chemischen Zusammensetzung.

Das Sicherheitsmerkmal umfasst bevorzugt eine Mischung aus einem pulverförmigen, chemisch instabilen anorganischen Merkmalsstoff und einem ebenfalls pulverförmigen, den Merkmalsstoff stabilisierenden Stoff. Alternativ können statt einer Pulvermischung auch kompliziertere Kombinationsformen eingesetzt werden, wie z.B. Agglomerate aus dem instabilen Merkmalstoff und dem den Merkmalstoff stabilisierenden Stoff.

3. (Bevorzugte Ausgestaltung) Sicherheitsmerkmal nach Absatz 1 oder 2, wobei der Merkmalsstoff teilweise in Wasser löslich ist, d.h. die Wasserlöslichkeit bei 20°C beträgt mehr als 2 mg pro Liter Wasser, bevorzugt mehr als 5 mg pro Liter Wasser, insbesondere bevorzugt mehr als 20 mg pro Liter Wasser, und gegebenenfalls instabil gegenüber wässrigen Lösungen von Säuren und/oder Basen ist.

4. (Bevorzugte Ausgestaltung) Sicherheitsmerkmal nach einem der Absätze 1 bis 3, wobei der Merkmalsstoff instabil gegenüber wässrigen Lösungen von Säuren und/oder Basen ist und die Instabilität gegenüber wässrigen Lösungen von Säuren und Basen gemäß den folgenden Tests (a) bzw. (b) definiert ist, und der den Merkmalsstoff stabilisierende Stoff mindestens die gleiche Instabilität gegenüber wässrigen Lösungen von Säuren und/oder Basen besitzt:
Test (a), betreffend einen gegenüber wässrigen Lösungen von Säuren instabilen Merkmalsstoff: ein Papiersubstrat, das 10 mg Merkmalsstoff enthält oder mit dem Merkmalsstoff beschichtet ist, wird 40 Minuten lang bei Raumtemperatur in 1 Liter einer 0,5-molaren Salzsäurelösung getaucht, wobei mindestens 25%, bevorzugt mindestens 50%, besonders bevorzugt mindestens 90% des Merkmalsignals bzw. der Merkmalsintensität verloren gehen müssen;
Test (b), betreffend einen gegenüber wässrigen Lösungen von Basen instabilen Merkmalsstoff: ein Papiersubstrat, das 10 mg Merkmalsstoff enthält oder mit dem Merkmalsstoff beschichtet ist, wird 40 Minuten lang bei Raumtemperatur in 1 Liter einer 0,5-molaren NaOH-Lösung getaucht, wobei mindestens 25%, bevorzugt mindestens 50%, besonders bevorzugt mindestens 90% des Merkmalsignals bzw. der Merkmalsintensität verloren gehen müssen.

4A. (Bevorzugte Ausgestaltung) Sicherheitsmerkmal nach einem der Absätze 1 bis 3, wobei die Kombination aus dem chemisch instabilen anorganischen Merkmalsstoff und dem den Merkmalsstoff stabilisierenden Stoff stabil gegenüber wässrigen Lösungen von Säuren und/oder Basen ist und die Stabilität gegenüber wässrigen Lösungen von Säuren und Basen gemäß den folgenden Tests (c), (d) bzw. (e) definiert ist:

Test (c), betreffend einen gegenüber wässrigen Lösungen von Säuren instabilen Merkmalsstoff: ein Papiersubstrat, das 10 mg Merkmalsstoff enthält oder mit dem Merkmalsstoff beschichtet ist, wird 40 Minuten lang bei Raumtemperatur in 1 Liter einer 0,5-molare Salzsäurelösung getaucht, wobei höchstens 20%, bevorzugt höchstens 10%, besonders bevorzugt höchstens 5% des Merkmalssignals bzw. der Merkmalsintensität verloren gehen dürfen;

Test (d), betreffend einen gegenüber wässrigen Lösungen von Basen instabilen Merkmalsstoff: ein Papiersubstrat, das 10mg Merkmalsstoff enthält oder mit dem Merkmalsstoff beschichtet ist, wird 40 Minuten lang bei Raumtemperatur in 1 Liter einer 0,5-molaren NaOH-Lösung getaucht, wobei höchstens 20%, bevorzugt höchstens 10%, besonders bevorzugt höchstens 5% des Merkmalssignals bzw. der Merkmalsintensität verloren gehen dürfen;

Test (e), betreffend einen gegenüber Wasser instabilen Merkmalsstoff: ein Papiersubstrat, das 10 mg Merkmalsstoff enthält oder mit dem Merkmalsstoff beschichtet ist, wird 10 h lang bei Raumtemperatur in 1 Liter Wasser getaucht, wobei höchstens 20 %, bevorzugt höchstens 10%, besonders bevorzugt höchstens 5% des Merkmalssignals bzw. der Merkmalsintensität verloren gehen dürfen.

4B. (Bevorzugte Ausgestaltung) Sicherheitsmerkmal nach einem der Absätze 1 bis 3A, wobei sich in der Kombination aus dem chemisch instabilen anorganischen Merkmalsstoff und dem den Merkmalsstoff stabilisierenden Stoff in Wasser bei Raumtemperatur von dem chemisch instabilen anorganischen Merkmalsstoff trotz seiner Löslichkeit von mehr als 2mg/l sich weniger als 2mg/l, bevorzugt weniger als 1mg/l auflösen können.

5. (Bevorzugte Ausgestaltung) Sicherheitsmerkmal nach einem der Absätze 1 bis 4, wobei der den Merkmalsstoff stabilisierende Stoff chemisch instabil gegenüber wässrigen Lösungen von Säuren und/oder Basen ist oder eine um mindestens 50% höhere Löslichkeit, weiter bevorzugt eine um mindestens 100% höhere Löslichkeit, insbesondere bevorzugt eine um mindestens 1000% höhere Löslichkeit in Wasser als der Merkmalsstoff aufweist.

6. (Bevorzugte Ausgestaltung) Sicherheitsmerkmal nach einem der Absätze 1 bis 5, wobei der Merkmalsstoff ein lumineszierender Stoff, ein elektrolumineszierender Stoff, ein magnetischer Stoff oder ein NIR-Absorber ist. Bevorzugt handelt es sich bei dem den Merkmalsstoff stabilisierenden Stoff um einen nicht lumineszierenden Stoff. Für den Fall dass der Merkmalstoff ein lumineszierender Stoff ist, tritt bei dem den Merkmalstoff stabilisierenden Stoff bevorzugt bei gleichen Anregungsbedingungen eine Lumineszenzintensität von weniger als 10%, insbesondere von weniger als 1% der Lumineszenzintensität des Merkmalstoffs auf.

7. (Bevorzugte Ausgestaltung) Sicherheitsmerkmal nach Absatz 6, wobei der Merkmalsstoff ein lumineszierender Stoff ist, der auf einem mit Seltenerdionen oder Übergangsmetallionen dotierten anorganischen Wirtsgitter basiert.

8. (Bevorzugte Ausgestaltung) Sicherheitsmerkmal nach Absatz 6 oder 7, wobei der lumineszierende Merkmalsstoff im infraroten Spektralbereich emittiert, bevorzugt in einem Wellenlängenbereich von 700 nm bis 3000 nm.

8A. (Bevorzugte Ausgestaltung) Sicherheitsmerkmal nach einem der Absätze 6 bis 8, wobei der Merkmalsstoff im Wesentlichen keine Upconversion zeigt, d.h. der Anteil der Intensität der Anti-Stokes-Emission beträgt weniger als 10% relativ zum Anteil der Intensität der Stokes-Emission.

9. (Bevorzugte Ausgestaltung) Sicherheitsmerkmal nach einem der Absätze 1 bis 8, wobei der Merkmalsstoff eine Korngröße (D99) von weniger als 20 $\mu$m, bevorzugt weniger als 12 $\mu$m, insbesondere bevorzugt weniger als 5 $\mu$m, aufweist. Weiterhin bevorzugt besitzen die Merkmalsstoffe, insbesondere die Lumineszenzstoffe, eine Korngröße (D99) von mehr als 1 $\mu$m, besonders bevorzugt von mehr als 2 $\mu$m.

10. (bevorzugte Ausgestaltung) Sicherheitsmerkmal nach einem der Absätze 1 bis 9, wobei die stabilisierende Komponente höchstens die gleiche Korngröße D99 wie der Merkmalsstoff aufweist, bevorzugt eine Korngröße, die mindestens 10%, bevorzugt mindestens 20%, insbesondere bevorzugt mindestens 50% kleiner als die Korngröße D99 des Merkmalsstoffs ist.

11. (Bevorzugte Ausgestaltung) Sicherheitsmerkmal nach einem der Absätze 1 bis 10, wobei der chemisch instabile anorganische Merkmalsstoff als Kationen Alkali-und/oder Erdalkalikationen enthält.

12. (Bevorzugte Ausgestaltung) Sicherheitsmerkmal nach Absatz 11, wobei der den Merkmalsstoff stabilisierende Stoff als Kationen Alkali-und/oder Erdalkalikationen enthält, bevorzugt die gleichen Alkali- und/oder Erdalkalikationen wie der Merkmalsstoff.

13. (Bevorzugte Ausgestaltung) Sicherheitsmerkmal nach einem der Absätze 1 bis 12, wobei der chemisch instabile anorganische Merkmalsstoff als Anionen Sulfate, Phosphate, Wolframate, Molybdate, Chromate, Titanate, Stannate oder Silikate enthält.

14. (Bevorzugte Ausgestaltung) Sicherheitsmerkmal nach Absatz 13, wobei der den Merkmalsstoff stabilisierende Stoff als Anionen Sulfate, Phosphate, Wolframate, Molybdate, Chromate, Titanate, Stannate oder Silikate enthält, bevorzugt die gleichen Anionen wie der Merkmalsstoff.

15. (Bevorzugte Ausgestaltung) Sicherheitsmerkmal nach einem der Absätze 1 bis 14, wobei der stabilisierende Stoff bezogen auf den Merkmalsstoff in einem Gewichtsverhältnis von mindestens 0,5 zu 1, bevorzugt mindestens 1 zu 1, weiter bevorzugt mindestens 2 zu 1, insbesondere bevorzugt mindestens 10 zu 1, vorhanden ist.

16. (Bevorzugte Ausgestaltung) Sicherheitsmerkmal nach einem der Absätze 1 bis 15, wobei die Partikeloberfläche des stabilisierenden Stoffes relativ zur Partikeloberfläche des Merkmalsstoffs im Sicherheitsmerkmal mindestens 0,5 zu 1, bevorzugt mindestens 1 zu 1, weiter bevorzugt mindestens 10 zu 1, insbesondere bevorzugt mindestens 100 zu 1, beträgt.

17. (Zweiter Aspekt der Erfindung) Wertdokument, insbesondere eine Banknote, umfassend das Sicherheitsmerkmal nach einem der Absätze 1 bis 16.

18. (Bevorzugte Ausgestaltung) Wertdokument nach Absatz 17, wobei das Wertdokument auf einem Papiersubstrat basiert und das Sicherheitsmerkmal der Papiermasse zugesetzt ist, bevorzugt homogen im Papiersubstrat verteilt ist.

19. (Bevorzugte Ausgestaltung) Wertdokument nach Absatz 17, wobei das Sicherheitsmerkmal an einer bestimmten Stelle des Wertdokuments lokalisiert vorhanden ist, beispielsweise mittels Einbau in ein bestimmtes Sicherheitselement wie etwa eine Melierfaser, ein Sicherheitsfaden, ein Sicherheitsstreifen oder ein Sicherheitspatch, oder mittels Bedrucken des Wertdokuments mit einer das Sicherheitsmerkmal enthaltenden Druckfarbe.

Ausführliche Beschreibung der bevorzugten Ausführungsformen

Wertdokumente im Rahmen der Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise Schmuck, Kosmetik, CDs, Verpackungen, Flaschen, Flakons und ähnliches. Bei dem Wertdokumentsubstrat muss es sich nicht zwangsläufig um ein Papiersubstrat handeln, es könnte insbesondere ein Kunststoffsubstrat sein oder ein Substrat, das sowohl Papier-Bestandteile als auch Kunststoffbestandteile aufweist.

Ein chemisch instabiler anorganischer Merkmalsstoff, z.B. ein Lumineszenzstoff, ist im ungeschützt vorliegenden Zustand unbeständig gegenüber Säuren und/oder Basen und/oder weist eine nicht vernachlässigbare Wasserlöslichkeit auf. Durch Kombination mit einer stabilisierenden Komponente, welche mindestens einen den Merkmalsstoff stabilisierenden Stoff umfasst, kann jedoch die Instabilität ganz oder teilweise behoben werden um ein Sicherheitsmerkmal mit ausreichender Stabilität für den Einsatz in Wertdokumenten, z.B. Banknoten, zu erhalten. Dies wird dadurch erreicht, dass der stabilisierende Stoff eine ähnliche Löslichkeit oder eine größere Löslichkeit wie der zu schützende Merkmalsstoff besitzt und bei seiner Zersetzung Ionen freigibt, welche ganz oder teilweise mit den Ionen des Merkmalsstoffs übereinstimmen. Eine Erhöhung der Konzentration an passenden Ionen in der Nähe des Merkmalsstoffs verringert oder unterbindet sein Auflösen. Diese Wirkung geht auf die Sättigung des umgebenden Milieus und auf die Beeinflussung der Gleichgewichtsreaktion auf Basis des für die Zersetzung des jeweiligen Merkmalsstoffs geltenden Löslichkeitsprodukts zurück. Durch geeignete Wahl z.B. der Stoffart, der Löslichkeit, der Korngröße und der Menge des stabilisierenden Zusatzstoffes können für die erfindungsgemäßen Sicherheitsmerkmale instabile Merkmalsstoffe eingesetzt werden, die als Reinstoff nicht für den Einsatz in Wertdokumenten, z.B. Banknoten, geeignet wären.

Die vorliegende Erfindung zeichnet sich weiterhin dadurch aus, dass stabilisierte Sicherheitsmerkmale gänzlich ohne zusätzliche Umhüllung erreichbar sind.

Die chemisch instabilen anorganischen Merkmalsstoffe können z.B. auf lumineszierenden Stoffen, auf magnetischen Stoffen oder auf NIR-Absorbern basieren. Zu den lumineszierenden Stoffen gehören insbesondere photolumineszierende Stoffe, elektrolumineszierende Stoffe, Upconverter und Downconverter. Als chemisch instabile anorganische Merkmalsstoffe werden lumineszierende Stoffe bevorzugt, insbesondere lumineszierende Stoffe auf Basis von mit Seltenerd-Ionen oder mit Übergangsmetall-Ionen dotierten anorganischen Wirtsgittern. Die Lumineszenzstoffe weisen bevorzugt Lumineszenzemissionen im infraroten Spektralbereich von 700 nm bis 3000 nm auf.

Gemäß einer bevorzugten Ausführungsform zeigen die Lumineszenzstoffe im Wesentlichen keine Upconversion, das heißt der Anteil der Intensität der Anti-Stokes-Emission beträgt weniger als bevorzugt weniger als 1 %, insbesondere bevorzugt weniger als 0,1 % relativ zum Anteil der Intensität der Stokes-Emission.

Gemäß einer weiteren bevorzugten Ausführungsform besitzen die Merkmalsstoffe, insbesondere die Lumineszenzstoffe, eine Korngröße (D99) von weniger als 20 $\mu$m, bevorzugt weniger als 12 $\mu$m, insbesondere bevorzugt weniger als 5 $\mu$m. Der Wert "D99" beschreibt dabei den Partikeldurchmesser, für den 99% aller Partikel ein kleineres Volumen haben, und ist eine gängige Messgröße zur Bewertung von Partikel-Korngrößen.

Gemäß einer weiteren bevorzugten Ausführungsform besitzen die Merkmalsstoffe, insbesondere die Lumineszenzstoffe, eine Korngröße (D99) von mehr als 2$\mu$m.

Gemäß einer bevorzugten Ausführungsform handelt es sich bei den "chemisch instabilen Merkmalsstoffen" um Merkmalsstoffe, die eine ausgeprägte Wasserlöslichkeit besitzen, das heißt die Wasserlöslichkeit (bei 20°C) beträgt mehr als 2 mg pro Liter Wasser, bevorzugt mehr als 5 mg pro Liter Wasser, besonders bevorzugt mehr als 20 mg pro Liter Wasser. Solche Merkmalsstoffe sind in ungeschützter Form nur bedingt einsatztauglich. Beispielsweise enthält eine einzelne Banknote mit einem Sicherheitsaufdruck der Größe 2 cm$^2$ bei 15% Pigmentierung der Druckfarbe mit dem Merkmalsstoff und bei 2 g/m$^2$ Flächengewicht des Andrucks ca. 0,06 mg des verwendeten Sicherheitspigments. Selbst bei einer geringen Löslichkeit von nur 2 mg pro Liter könnte also durch Kontakt mit einem Liter Wasser der gesamte Pigmentgehalt eines Bündels von mehr als 30 Banknoten komplett aufgelöst werden. Kontakte mit größeren Mengen Wasser entstehen z.B. durch unabsichtliches Waschen der Banknoten in der Waschmaschine. Selbst bei Kontakt mit einer geringen Menge Wasser, z.B. Regen, Luftfeuchtigkeit oder Fingerschweiß, können instabile Merkmalsstoffe ganz oder teilweise zerstört werden.

Weiterhin zeigen Merkmalsstoffe mit einer ausgeprägten Wasserlöslichkeit im Normalfall eine besonders hohe Instabilität gegenüber wässrigen Säuren und Basen. Die Löslichkeit solcher Merkmalsstoffe kann durch eine Änderung des pH-Wertes teilweise um Größenordnungen erhöht werden. Die erfindungsgemäßen Sicherheitsmerkmale können auch in diesem Fall die Zerstörung des instabilen Merkmalsstoffs vermindern. Beispiele für unbeabsichtigte Kontakte von Wertdokumenten mit wässrigen sauren oder basischen Lösungen sind zum Beispiel der Kontakt mit Schweiß, Waschmitteln, Seifen, Lebensmitteln oder mit chemischen Komponenten während der Verarbeitung, z.B. Druckfarben oder Mineralsäuren.

Gemäß der vorliegenden Erfindung wird ein verbessertes Sicherheitsmerkmal dadurch bereitgestellt, dass der bevorzugt pulverförmig vorliegende Merkmalsstoff mit mindestens einem weiteren, bevorzugt pulverförmig vorliegenden Stoff als stabilisierender Komponente versetzt wird und dadurch vor schädlichen Einflüssen durch Wasser bzw. wässrigen Säuren und Basen geschützt wird. Damit stabilisiert die stabilisierende Komponente den Merkmalsstoff. Der Merkmalstoff bildet in Abwesenheit der zusätzlichen stabilisierenden Komponente ein instabiles Sicherheitsmerkmal, ist also instabil gegenüber Wasser, Säuren oder Basen. In Anwesenheit der zusätzlichen stabilisierenden Komponente bildet der Merkmalstoff ein Sicherheitsmerkmal mit unter den gleichen Testbedingungen gegenüber Wasser, Säuren oder Basen deutlich verbesserter Stabilität.

Bei der stabilisierenden Komponente handelt es sich um mindestens einen Stoff, der eine ähnliche oder eine größere Wasserlöslichkeit wie der zu schützende Merkmalsstoff besitzt, insbesondere eine ähnliche oder eine größere Instabilität gegenüber Säuren oder Basen aufweist. Dadurch wird erreicht, dass sich die stabilisierende Komponente vorzeitig oder gleichzeitig mit dem Merkmalsstoff auflöst. Wird die stabilisierende Komponente geschickt gewählt, wird bei deren Auflösen die lokale Konzentration an denjenigen Ionen erhöht, die auch beim Auflösungsprozess des Merkmalsstoffs beteiligt sind. Hiermit wird über das Massenwirkungsgesetz bzw. das Löslichkeitsprodukt des Merkmalsstoffs das Gleichgewicht der Reaktion des Auflösungsprozesses zugunsten des Merkmalsstoffes verschoben. Der Merkmalsstoff löst sich somit langsamer auf oder er hört ganz auf, sich aufzulösen. Durch zusätzliche Anpassungen z.B. der Menge und der Korngröße der stabilisierenden Komponente lässt sich dieser Einfluss weiter steigern. Dies hängt mit der verbesserten Kinetik des Auflösungsprozesses bei einer höheren Oberfläche zusammen.

Für das bessere Verständnis der vorliegenden Erfindung dient das folgende, fiktive Beispiel:
Die Auflösung eines willkürlich gewählten Merkmalsstoffs AB wird durch die folgende Gleichgewichtsreaktion veranschaulicht, bei der die beiden Pfeile die Hin- und die Rückreaktion darstellen:

$$AB \longleftrightarrow A^+ + B^-$$

Das fiktive Löslichkeitsprodukt des obigen Merkmalsstoffs lautet z.B.:

$$K_L = [A]*[B] = 9*10^{-6} \, mol^2/L^2$$

Ist nur der Stoff AB vorhanden und löst sich auf, so gilt

"gelöste Menge AB" = [A] = [B]

und damit $[A]^2 = 9*10^{-6}$ mol$^2$/L$^2$ sowie $[A] = 3*10^{-3}$ mol/L

Bei einem Molgewicht des Stoffs AB von 100g/mol lösen sich im Gleichgewicht also 300 mg des Stoffs in 1 Liter Wasser.

Bei Zusatz einer löslichen stabilisierenden Komponente CB wird jedoch die Konzentration [B] stark erhöht:

$$CB \rightarrow C^+ + B^-$$

Hierdurch wird das Gleichgewicht beim Auflösen von AB beeinflusst.

Liegt die Konzentration [B] dadurch beispielsweise bei $3*10^{-1}$ mol/L, lösen sich vom Stoff AB nur noch:

$$[A]=K_L/[B] = (9*10^{-6} \text{ mol}^2/\text{L}^2) / (3*10^{-1} \text{ mol/L}) = 3*10^{-5} \text{ mol/L}$$

Die Löslichkeit des Merkmals AB sinkt also um einen Faktor 100 im Vergleich zum Fall ohne die zusätzliche stabilisierende Komponente. Der Effekt wird deutlich verstärkt, da die Konzentration lokal, z.B. innerhalb des Papiersubstrats der Banknote, stark erhöht sein kann und es länger dauert, bis sich die Ionen weit genug verteilt haben und sich eine globale Durchschnittskonzentration in der gesamten wässrigen Lösung bildet.

Gemäß einer bevorzugten Ausführungsform handelt es sich bei den instabilen anorganischen Merkmalsstoffen um Verbindungen, welche Alkali- oder Erdalkalikationen beinhalten, also z.B. die Elemente Li, Na, K, Rb, Cs, Mg, Ca, Sr oder Ba enthalten. Diese Elemente zeigen oft eine schwache Wechselwirkung mit dem Kristallgitter und bilden daher häufig Stoffe mit einer ausgeprägten Wasserlöslichkeit bzw. einer unzureichenden chemischen Stabilität gegenüber Säuren und Basen.

Die stabilisierende Komponente ist in diesem Fall vorzugsweise eine Verbindung, die ebenfalls Alkali- oder Erdalkalikationen enthält. Insbesondere wird bevorzugt, dass die stabilisierende Komponente die gleichen Alkali- oder Erdalkalikationen wie der Merkmalsstoff enthält.

Gemäß einer weiteren bevorzugten Ausführungsform handelt es sich bei den instabilen anorganischen Merkmalsstoffen um Verbindungen, welche als Anionen Sulfate, Phosphate, Wolframate, Molybdate, Chromate, Titanate, Stannate oder Silikate enthalten, besonders bevorzugt Sulfate oder Phosphate. Solche Verbindungen sind oft instabil bei pH-Wert-Änderungen, da durch Protonierung der anionischen Gruppen das Lösungsgleichgewicht beeinflusst wird.

Die stabilisierende Komponente ist in diesem Fall vorzugsweise eine anorganische Verbindung, die ebenfalls Sulfate, Phosphate, Wolframate, Molybdate, Chromate, Titanate, Stannate oder Silikate, bevorzugt Sulfate oder Phosphate, als Anionen enthält, und insbesondere bevorzugt von den genannten Anionen die gleichen wie der Merkmalsstoff enthält.

Gemäß einer weiteren bevorzugten Ausführungsform handelt es sich bei den instabilen anorganischen Merkmalsstoffen um Verbindungen, welche gleichzeitig Alkali- oder Erdalkalikationen beinhalten und als Anionen Sulfate, Phosphate, Wolframate, Molybdate, Chromate, Titanate, Stannate oder Silikate, besonders bevorzugt Sulfate oder Phosphate, enthalten.

Es wird bevorzugt, dass die stabilisierende Komponente in diesem Fall eine Verbindung ist, die entweder Alkalioder Erdalkalikationen beinhaltet, oder die als Anionen Sulfate, Phosphate, Wolframate, Molybdate, Chromate, Titanate, Stannate oder Silikate, besonders bevorzugt Sulfate oder Phosphate, enthält. Insbesondere wird bevorzugt, dass die stabilisierende Komponente in diesem Fall eine Verbindung ist, die sowohl Alkali- oder Erdalkalikationen beinhaltet, als auch als Anionen Sulfate, Phosphate, Wolframate, Molybdate, Chromate, Titanate, Stannate oder Silikate, besonders bevorzugt Sulfate oder Phosphate, enthält.

Gemäß einer weiteren bevorzugten Ausführungsform umfasst die stabilisierende Komponente mehrere stabilisierende Stoffe. Beispielsweise einen ersten stabilisierenden Stoff, welcher Alkali- oder Erdalkalikationen beinhaltet, und einen zweiten stabilisierenden Stoff, welcher als Anionen Sulfate, Phosphate, Wolframate, Molybdate, Chromate, Titanate, Stannate oder Silikate, besonders bevorzugt Sulfate oder Phosphate, enthält.

Es sollte erwähnt werden, dass auch mehrere stabile Verbindungen existieren, welche aus den genannten bevorzugten Kationen und Anionen aufgebaut sind. Beispielsweise enthalten die Verbindungen LiNbO$_3$, KTiOPO$_4$ oder YPO$_4$ zwar Alkalimetalle und/oder Phosphatgruppen, sind jedoch ohne Zuhilfenahme von weiteren Additiven, z.B. Fluoride oder andere Salze, oder ohne Zuhilfenahme von erhöhtem Druck oder Temperatur nicht ausgeprägt wasserlöslich. Entsprechende Verbindungen können also unabhängig von einer stabilisierenden Komponente, z.B. in Form von Leuchtstoffen oder anderen Merkmalsstoffen, in Sicherheitselementen eingesetzt werden und sind somit nicht Teil dieser Erfindung.

Gemäß einer bevorzugten Ausführungsform handelt es sich bei dem Merkmalsstoff um einen Lumineszenzstoff mit einem anorganischen Wirtsgitter mit einer Dotierung mit Seltenerdionen als Lumineszenzemitter. Derartige Merkmalsstoffe bieten weitere technische Vorteile, beispielsweise weisen sie besonders scharfbandige, spezifische Emissionslinien auf, wodurch sie besonders gut zur spektralen Codierung von Sicherheitsmerkmalen verwendet werden können. Als technischer Nachteil wirkt jedoch, dass bestimmte Wirtsgitter, welche in der Lage sind, Leuchtstoffe mit besonders charakteristischen Emissionsspektren zu bilden, eine sehr schlechte Stabilität besitzen und daher ohne zusätzliche Stabilisierung nicht als Sicherheitsmerkmal eingesetzt werden können. Dieser Nachteil kann durch die erfindungsgemäßen Sicherheitsmerkmale behoben werden.

Gemäß einer weiteren bevorzugten Ausführungsform handelt es sich bei dem Merkmalsstoff um einen Lumineszenzstoff mit einem anorganischen Wirtsgitter mit einer Dotierung mit Übergangsmetallionen als Lumineszenzemitter. Derartige Merkmalsstoffe bieten weitere technische Vorteile, beispielsweise weisen sie charakteristische Lumineszenzspektren auf, welche nicht mit denen der entsprechenden Seltenerd-dotierten Verbindungen übereinstimmen. Als technischer Nachteil wirkt jedoch, dass geeignete Wirtsgitter, welche in der Lage sind, Leuchtstoffe mit Übergangsmetalldotierungen zu bilden, häufig eine sehr schlechte Stabilität besitzen und daher ohne zusätzliche Stabilisierung nicht als Sicherheitsmerkmal eingesetzt werden können. Dieser Nachteil kann durch die erfindungsgemäßen Sicherheitsmerkmale behoben werden.

Da sich die stabilisierende Komponente anstelle des Merkmalsstoffs auflösen soll, muss sie in ausreichender Menge vorhanden sein. Die stabilisierende Komponente ist relativ zum Merkmalsstoff im Sicherheitsmerkmal in einem Gewichtsverhältnis von mindestens 0,5:1, bevorzugt mindestens 1:1, weiter bevorzugt mindestens 2:1, insbesondere bevorzugt mindestens 10:1, vorhanden.

Die Geschwindigkeit, mit der Ionen in die umgebende Lösung abgegeben werden, ist bei ähnlicher Löslichkeit vor allem von der verfügbaren freien Oberfläche der Partikel abhängig, das heißt sowohl die Menge, als auch die Korngröße der Partikel spielen eine Rolle. Die Partikeloberfläche der stabilisierenden Komponente relativ zur Partikeloberfläche des Merkmalsstoffs im Sicherheitsmerkmal beträgt mindestens 0,5:1, bevorzugt mindestens 1:1, weiter bevorzugt mindestens 10:1, insbesondere bevorzugt mindestens 100:1.

Gemäß einer bevorzugten Ausführungsform besitzen die stabilisierende Komponente und der Merkmalsstoff eine im Wesentlichen gleiche Korngröße, das heißt die Korngröße der beiden Stoffe unterscheidet sich um weniger als 10%.

Gemäß einer weiteren bevorzugten Ausführungsform besitzen die stabilisierende Komponente und der Merkmalsstoff deutlich unterschiedliche Korngrößen, das heißt die stabilisierende Komponente besitzt eine Korngröße, die mindestens 10%, bevorzugt mindestens 20%, insbesondere bevorzugt mindestens 50% kleiner als die Korngröße des Merkmalsstoffs ist.

Gemäß einer bevorzugten Ausführungsform besitzen die stabilisierende Komponente und der Merkmalsstoff eine im Wesentlichen gleiche Löslichkeit, das heißt die Löslichkeit der beiden Stoffe unterscheidet sich um weniger als 10%.

Gemäß einer weiteren bevorzugten Ausführungsform besitzt die stabilisierende Komponente eine höhere Löslichkeit als der Merkmalsstoff, bevorzugt eine um 50% höhere Löslichkeit, weiter bevorzugt eine um 100% höhere Löslichkeit, insbesondere bevorzugt eine um 1000% höhere Löslichkeit als der Merkmalsstoff.

Gemäß einer bevorzugten Ausführungsform werden die erfindungsgemäßen Sicherheitsmerkmale der Papiermasse zugesetzt und sind homogen im Papier des Wertdokuments verteilt.

Gemäß einer weiteren bevorzugten Ausführungsform werden die erfindungsgemäßen Sicherheitsmerkmale lokalisiert an bestimmten Stellen des Wertdokumentes angebracht, beispielsweise durch Einbau in bestimmte Sicherheitselemente wie Melierfasern, Sicherheitsfäden oder Hologramme oder durch Bedrucken des Wertdokuments mit Drucklacken, welche das Sicherheitsmerkmal enthalten.

Gemäß einer bevorzugten Ausführungsform enthält das Sicherheitsmerkmal neben dem instabilen Merkmalsstoff und der stabilisierenden Komponente noch weitere Stoffe, beispielsweise weitere (stabile) Merkmalsstoffe oder weitere (nicht stabilisierende) Komponenten.

Die Erfindung wird nachstehend anhand von speziellen Ausführungsbeispielen erläutert.

Beispiel 1:

Als Merkmalsstoff wird $Ca_3(PO_4)_2$:Yb,Er eingesetzt, ein mit Infrarotstrahlung der Wellenlänge 980 nm anregbarer Leuchtstoff, der im Bereich 1500 nm bis 1600 nm luminesziert. Die Korngröße (D99) beträgt 5 $\mu$m. Aufgrund der Wasserlöslichkeit von 20 mg/L und seiner Instabilität gegenüber wässrigen Säuren ist der ungeschützte Merkmalsstoff jedoch nicht zur Absicherung von Wertdokumenten geeignet. Wird der ungeschützte Merkmalsstoff als Sicherheitsmerkmal in ein Sicherheitselement wie z.B. eine Melierfaser eingebracht, kann er durch in die Melierfaser eindringende Feuchtigkeit oder saure Lösungen zerstört werden.

Durch Kombination des Merkmalsstoffs mit einer stabilisierenden Komponente kann jedoch ein Sicherheitsmerkmal mit vorteilhaften Eigenschaften erzeugt werden.

Als stabilisierende Komponente wird $Ca_3(AsO_4)_2$ eingesetzt. Es besitzt im Vergleich zu $Ca_3(PO_4)_2$ eine ungefähr doppelt so hohe Löslichkeit und setzt beim Auflösen Calcium-Ionen frei, welche das Auflösen des $Ca_3(PO_4)_2$ behindern. Die Korngröße beträgt 2 $\mu$m, und das Gewichtsverhältnis der Mischung $Ca_3(AsO_4)_2$ / $Ca_3(PO_4)_2$ beträgt 2:1. Dadurch ist die Oberfläche der $Ca_3(AsO_4)_2$-Partikel im Sicherheitsmerkmal deutlich höher als die der $Ca_3(PO_4)_2$-Partikel.

Werden Sicherheitselemente wie z.B. Melierfasern aus dem Merkmalstoff mit der stabilisierenden Komponente erzeugt, so zeigen sie im Vergleich zu Melierfasern mit dem reinen Merkmalsstoff eine deutlich höhere Stabilität gegenüber Feuchtigkeit und gegenüber wässrigen Säurelösungen.

Wird beispielsweise ein Blatt, welches Melierfasern mit dem reinen Merkmalsstoff enthält, analog zu Test (c) mit Salzsäurelösung behandelt, so verringert sich die Lumineszenzintensität der Fasern um mehr als 50%. Werden hingegen Melierfasern verwendet, welche den Merkmalsstoff mit der stabilisierenden Komponente enthalten, verringert sich die Lumineszenzintensität um weniger als 10%. Die Verringerung der Lumineszenzintensität bei Kontakt mit Wasser und Base analog zu Test (d) und Test (e) liegt ebenfalls bei weniger als 10%.

Beispiel 2:

Als Merkmalsstoff wird $BaSO_4:Mn^{6+}$ eingesetzt, ein Leuchtstoff, welcher bei Anregung mit Licht der Wellenlänge 550 nm eine breite Lumineszenz im Infraroten von 900 nm bis 1300 nm zeigt. Die Korngröße (D99) beträgt 3 $\mu$m. Im Vergleich zu dem Merkmalsstoff aus Beispiel 1 ist die Wasserlöslichkeit mit 2,5 mg/L deutlich geringer, jedoch ist die Löslichkeit hoch genug, um bei direktem Kontakt mit einer großen Menge Wasser (z.B. bei direkter Einbringung in die Papiermasse, oder das Wertdokument fällt ins Wasser) oder bei direktem Kontakt mit wässrigen Säuren und Basen von Nachteil zu sein.

Als stabilisierende Komponente wird $SrSO_4$ eingesetzt, welches eine deutlich höhere Löslichkeit von 132 mg/L besitzt und beim Auflösen Sulfat-Ionen freisetzt, welche das Auflösen von $BaSO_4$ behindern. Die Korngröße beträgt ebenfalls 3 $\mu$m. Das Gewichtsverhältnis der Mischung $SrSO_4:BaSO_4$ im Sicherheitsmerkmal beträgt 3:1. Wird das Sicherheitsmerkmal zur Absicherung von Wertdokumenten benutzt, z.B. durch direkte Einbringung in die Papiermasse bei der Papierherstellung oder durch Bedruckung des Wertpapiers, zeigt es eine deutlich höhere Stabilität gegenüber Wasser bzw. wässrigen Säuren und Laugen als der reine Merkmalsstoff.

Wird beispielsweise ein Blatt, welches den reinen Merkmalsstoff enthält, analog zu Test (c) mit Salzsäurelösung behandelt, so verringert sich die Lumineszenzintensität des Blattes um mehr als 25%. Wird stattdessen der Merkmalsstoff zusammen mit der stabilisierenden Komponente eingesetzt, verringert sich die Lumineszenzintensität um weniger als 5%. Die Verringerung der Lumineszenzintensität bei Kontakt mit Wasser und Base analog zu Test (d) und Test (e) liegt ebenfalls bei weniger als 5%.

Beispiel 3:

Als Merkmalsstoff wird $Li_3PO_4:Cr^{5+}$ eingesetzt, ein Leuchtstoff, welcher bei Anregung mit Licht der Wellenlänge 550 nm eine breite Lumineszenz im Infraroten von 900 bis 1300 zeigt. Die Korngröße (D99) beträgt 5$\mu$m. Die Wasserlöslichkeit beträgt 390 mg/L und der Merkmalsstoff ist instabil gegenüber wässrigen Säuren. Wird der ungeschützte Merkmalsstoff beispielsweise in einen hydrophoben Drucklack eingebracht und auf ein Wertdokument aufgedruckt, so wird der Merkmalsstoff anfänglich durch den ausgehärteten Drucklack geschützt. Im weiteren zeitlichen Verlauf bzw. durch Abnutzungserscheinungen treten jedoch Mikrorisse oder ähnliche Störstellen in der Bedruckung auf, welche dazu führen, dass Feuchtigkeit (bzw. wässrige Säuren und Basen) den Merkmalsstoff erreichen und zerstören kann.

Als stabilisierende Komponente wird $Li_3PO_4$ eingesetzt, welches im Wesentlichen die gleiche Löslichkeit wie der Merkmalsstoff besitzt. Die Korngröße beträgt 2 $\mu$m und das Gewichtsverhältnis aus stabilisierender Komponente und Merkmalsstoff im Sicherheitsmerkmal beträgt 10:1. Durch die deutlich höhere Menge und die kleinere Korngröße wird das $Li_3PO_4$ der stabilisierenden Komponente deutlich schneller angelöst und sättigt die umgebende Lösung mit Lithium-Ionen und Phosphat-Ionen, wodurch ein Auflösen des Merkmalstoffs verhindert wird.

Wird das Sicherheitsmerkmal in einen Drucklack eingebracht und damit ein Wertdokument bedruckt, zeigt die Bedruckung eine deutlich höhere Stabilität gegen eindringende Feuchtigkeit bzw. wässrige Säuren und Laugen als eine Bedruckung mit dem reinen Merkmalsstoff.

Wird beispielsweise ein Andruck, welcher den reinen Merkmalsstoff enthält, analog zu Test (c) mit Salzsäurelösung behandelt, so verringert sich die Lumineszenzintensität des Andruckes um mehr als 50%. Wird stattdessen der Merkmalsstoff zusammen mit der stabilisierenden Komponente eingesetzt, verringert sich die Lumineszenzintensität um weniger als 10%. Die Verringerung der Lumineszenzintensität bei Kontakt mit Wasser und Base analog zu Test (d) und Test (e) liegt ebenfalls bei weniger als 10%.

**Patentansprüche**

1. Sicherheitsmerkmal zur Absicherung von Wertdokumenten, umfassend einen chemisch instabilen anorganischen Merkmalsstoff, **dadurch gekennzeichnet, dass** das Sicherheitsmerkmal weiter umfasst: eine stabilisierende Komponente umfassend einen den Merkmalsstoff stabilisierenden Stoff, der in Wasser mindestens die gleiche Löslichkeit wie der zu schützende Merkmalsstoff besitzt und bei seiner Zersetzung Ionen freigibt, die mindestens zum Teil mit den Ionen des Merkmalsstoffs übereinstimmen.

2. Sicherheitsmerkmal nach Anspruch 1, wobei der den Merkmalsstoff stabilisierende Stoff ein aus Kationen und Anionen aufgebautes Salz, besonders bevorzugt ein anorganisches Salz ist.

3. Sicherheitsmerkmal nach Anspruch 1 oder 2, wobei der Merkmalsstoff teilweise in Wasser löslich ist, d.h. die Wasserlöslichkeit bei 20°C beträgt mehr als 2 mg pro Liter Wasser, bevorzugt mehr als 5 mg pro Liter Wasser, insbesondere bevorzugt mehr als 20 mg pro Liter Wasser, und gegebenenfalls instabil gegenüber wässrigen Lösungen von Säuren und/oder Basen ist.

4. Sicherheitsmerkmal nach einem der Ansprüche 1 bis 3, wobei der Merkmalsstoff instabil gegenüber wässrigen Lösungen von Säuren und/oder Basen ist und die Instabilität gegenüber wässrigen Lösungen von Säuren und Basen gemäß den folgenden Tests (a) bzw. (b) definiert ist, und der den Merkmalsstoff stabilisierende Stoff mindestens die gleiche Instabilität gegenüber wässrigen Lösungen von Säuren und/oder Basen besitzt:

   Test (a), betreffend einen gegenüber wässrigen Lösungen von Säuren instabilen Merkmalsstoff: ein Papiersubstrat, das 10 mg Merkmalsstoff enthält oder mit dem Merkmalsstoff beschichtet ist, wird 40 Minuten lang bei Raumtemperatur in 1 Liter einer 0,5-molaren Salzsäurelösung getaucht, wobei mindestens 25%, bevorzugt mindestens 50%, besonders bevorzugt mindestens 90% des Merkmalssignals bzw. der Merkmalsintensität verloren gehen müssen;
   Test (b), betreffend einen gegenüber wässrigen Lösungen von Basen instabilen Merkmalsstoff: ein Papiersubstrat, das 10 mg Merkmalsstoff enthält oder mit dem Merkmalsstoff beschichtet ist, wird 40 Minuten lang bei Raumtemperatur in 1 Liter einer 0,5-molaren NaOH-Lösung getaucht, wobei mindestens 25%, bevorzugt mindestens 50%, besonders bevorzugt mindestens 90% des Merkmalssignals bzw. der Merkmalsintensität verloren gehen müssen.

5. Sicherheitsmerkmal nach einem der Ansprüche 1 bis 4, wobei der den Merkmalsstoff stabilisierende Stoff chemisch instabil gegenüber wässrigen Lösungen von Säuren und/oder Basen ist oder eine um mindestens 50% höhere Löslichkeit, weiter bevorzugt eine um mindestens 100% höhere Löslichkeit, insbesondere bevorzugt eine um mindestens 1000% höhere Löslichkeit in Wasser als der Merkmalsstoff aufweist.

6. Sicherheitsmerkmal nach einem der Ansprüche 1 bis 5, wobei der Merkmalsstoff ein lumineszierender Stoff, ein elektrolumineszierender Stoff, ein magnetischer Stoff oder ein NIR-Absorber ist.

7. Sicherheitsmerkmal nach Anspruch 6, wobei der Merkmalsstoff ein lumineszierender Stoff ist, der auf einem mit Seltenerdionen oder Übergangsmetallionen dotierten anorganischen Wirtsgitter basiert.

8. Sicherheitsmerkmal nach Anspruch 6 oder 7, wobei der lumineszierende Merkmalsstoff im infraroten Spektralbereich emittiert, bevorzugt in einem Wellenlängenbereich von 700 nm bis 3000 nm.

9. Sicherheitsmerkmal nach einem der Ansprüche 1 bis 8, wobei der Merkmalsstoff eine Korngröße (D99) von weniger als 20 $\mu$m, bevorzugt weniger als 12 $\mu$m, insbesondere bevorzugt weniger als 5 $\mu$m, aufweist.

10. Sicherheitsmerkmal nach einem der Ansprüche 1 bis 9, wobei die stabilisierende Komponente höchstens die gleiche Korngröße D99 wie der Merkmalsstoff aufweist, bevorzugt eine Korngröße, die mindestens 10%, bevorzugt mindestens 20%, insbesondere bevorzugt mindestens 50% kleiner als die Korngröße D99 des Merkmalsstoffs ist.

11. Sicherheitsmerkmal nach einem der Ansprüche 1 bis 10, wobei der chemisch instabile anorganische Merkmalsstoff als Kationen Alkali- und/oder Erdalkalikationen enthält.

12. Sicherheitsmerkmal nach Anspruch 11, wobei der den Merkmalsstoff stabilisierende Stoff als Kationen Alkali- und/oder Erdalkalikationen enthält, bevorzugt die gleichen Alkali- und/oder Erdalkalikationen wie der Merkmalsstoff.

13. Sicherheitsmerkmal nach einem der Ansprüche 1 bis 12, wobei der chemisch instabile anorganische Merkmalsstoff als Anionen Sulfate, Phosphate, Wolframate, Molybdate, Chromate, Titanate, Stannate oder Silikate enthält.

14. Sicherheitsmerkmal nach Anspruch 13, wobei der den Merkmalsstoff stabilisierende Stoff als Anionen Sulfate, Phosphate, Wolframate, Molybdate, Chromate, Titanate, Stannate oder Silikate enthält, bevorzugt die gleichen Anionen wie der Merkmalsstoff.

15. Sicherheitsmerkmal nach einem der Ansprüche 1 bis 14, wobei der stabilisierende Stoff bezogen auf den Merkmalsstoff in einem Gewichtsverhältnis von mindestens 0,5 zu 1, bevorzugt mindestens 1 zu 1, weiter bevorzugt mindestens 2 zu 1, insbesondere bevorzugt mindestens 10 zu 1, vorhanden ist.

16. Sicherheitsmerkmal nach einem der Ansprüche 1 bis 15, wobei die Partikeloberfläche des stabilisierenden Stoffes relativ zur Partikeloberfläche des Merkmalsstoffs im Sicherheitsmerkmal mindestens 0,5 zu 1, bevorzugt mindestens 1 zu 1, weiter bevorzugt mindestens 10 zu 1, insbesondere bevorzugt mindestens 100 zu 1, beträgt.

17. Wertdokument, insbesondere eine Banknote, umfassend das Sicherheitsmerkmal nach einem der Ansprüche 1 bis 16.

18. Wertdokument nach Anspruch 17, wobei das Wertdokument auf einem Papiersubstrat basiert und das Sicherheitsmerkmal der Papiermasse zugesetzt ist, bevorzugt homogen im Papiersubstrat verteilt ist.

19. Wertdokument nach Anspruch 17, wobei das Sicherheitsmerkmal an einer bestimmten Stelle des Wertdokuments lokalisiert vorhanden ist, beispielsweise mittels Einbau in ein bestimmtes Sicherheitselement wie etwa eine Melierfaser, ein Sicherheitsfaden, ein Sicherheitsstreifen oder ein Sicherheitspatch, oder mittels Bedrucken des Wertdokuments mit einer das Sicherheitsmerkmal enthaltenden Druckfarbe.


**Claims**

1. A security feature for securing value documents, comprising a chemically unstable inorganic feature substance, **characterized in that** the security feature further comprises:
   a stabilizing component comprising a substance that stabilizes the feature substance, said substance having at least the same solubility in water as the feature substance to be protected and releasing ions when said substance is decomposed, which ions correspond to the ions of the feature substance at least in part.

2. The security feature according to claim 1, wherein the substance stabilizing the feature substance is a salt that is composed of cations and anions, particularly preferably an inorganic salt.

3. The security feature according to claim 1 or 2, wherein the feature substance is partially soluble in water, i.e. the water solubility at 20°C amounts to more than 2 mg per liter of water, preferably more than 5 mg per liter of water, particularly preferably more than 20 mg per liter of water, and is optionally unstable with respect to aqueous solutions of acids and/or bases.

4. The security feature according to any of claims 1 to 3, wherein the feature substance is unstable with respect to aqueous solutions of acids and/or bases and the instability with respect to aqueous solutions of acids and bases is defined according to the following tests (a) and/or b), and the substance stabilizing the feature substance has at least the same instability with respect to aqueous solutions of acids and/or bases:

   test (a) relating to a feature substance unstable with respect to aqueous solutions of acids: a paper substrate that contains 10 mg of the feature substance or is coated with the feature substance is immersed in 1 liter of a 0.5-molar hydrochloric acid solution at room temperature for 40 minutes, wherein at least 25%, preferably at least 50%, particularly preferably at least 90% of the feature signal and/or of the feature intensity have to be lost;
   test (b) relating to a feature substance unstable with respect to aqueous solutions of bases: a paper substrate that contains 10 mg of the feature substance or is coated with the feature substance is immersed in 1 liter of a 0.5-molar NaOH solution at room temperature for 40 minutes, wherein at least 25%, preferably at least 50%, particularly preferably at least 90% of the feature signal and/or of the feature intensity have to be lost.

5. The security feature according to any of claims 1 to 4, wherein the substance stabilizing the feature substance is chemically unstable with respect to aqueous solutions of acids and/or bases or has a solubility in water that is higher by at least 50%, more preferably a solubility that is higher by at least 100%, particularly preferably a solubility that is higher by at least 1000% than that of the feature substance.

6. The security feature according to any of claims 1 to 5, wherein the feature substance is a luminescent substance, an electroluminescent substance, a magnetic substance or a NIR absorber.

7. The security feature according to claim 6, wherein the feature substance is a luminescent substance based on an inorganic host lattice doped with rare earth ions or transition metal ions.

8. The security feature according to claim 6 or 7, wherein the luminescent feature substance emits in the infrared spectral range, preferably in a wavelength range from 700 nm to 3000 nm.

9. The security feature according to any of claims 1 to 8, wherein the feature substance has a particle size (D99) of less than 20 $\mu$m, preferably less than 12 $\mu$m, particularly preferably less than 5 $\mu$m.

10. The security feature according to any of claims 1 to 9, wherein the stabilizing component has at most the same particle size D99 as the feature substance, preferably a particle size that is at least 10%, preferably at least 20%, particularly preferably at least 50%, smaller than the particle size D99 of the feature substance.

11. The security feature according to any of claims 1 to 10, wherein the chemically unstable inorganic feature substance contains alkali metal and/or alkaline earth cations as cations.

12. The security feature according to claim 11, wherein the substance stabilizing the feature substance contains alkali metal and/or alkaline earth cations as cations, preferably the same alkali metal and/or alkaline earth cations as the feature substance.

13. The security feature according to any of claims 1 to 12, wherein the chemically unstable inorganic feature substance contains sulfates, phosphates, tungstates, molybdates, chromates, titanates, stannates or silicates as anions.

14. The security feature according to claim 13, wherein the substance stabilizing the feature substance contains sulfates, phosphates, tungstates, molybdates, chromates, titanates, stannates or silicates as anions, preferably the same anions as the feature substance.

15. The security feature according to any of claims 1 to 14, wherein the stabilizing substance is present in a weight ratio with reference to the feature substance of at least 0.5 to 1, preferably at least 1 to 1, further preferably at least 2 to 1, particularly preferably at least 10 to 1.

16. The security feature according to any of claims 1 to 15, wherein the particle surface of the stabilizing substance relative to the particle surface of the feature substance in the security feature amounts to at least 0.5 to 1, preferably at least 1 to 1, further preferably at least 10 to 1, particularly preferably at least 100 to 1.

17. A value document, in particular a banknote, comprising the security feature according to any of claims 1 to 16.

18. The value document according to claim 17, wherein the value document is based on a paper substrate and the security feature is added to the paper stock, preferably is homogeneously distributed in the paper substrate.

19. The value document according to claim 17, wherein the security feature is present in a localized manner at a specific location of the value document, for example by means of incorporation in a certain security element such as a mottling fiber, a security thread, a security strip or a security patch, or by means of printing the value document with a printing ink containing the security feature.

**Revendications**

1. Caractéristique de sécurité destiné à la sécurisation de documents de valeur, comprenant :
une substance caractéristique inorganique chimiquement instable, **caractérisée en ce que** la caractéristique de sécurité comprend en outre :

un composant stabilisant comprenant une substance stabilisant la substance caractéristique qui, dans l'eau, possède au moins la même solubilité que la substance caractéristique à protéger et libère lors de sa décomposition des ions qui correspondent au moins en partie aux ions de la substance caractéristique.

2. Caractéristique de sécurité selon la revendication 1, cependant que la substance stabilisant la substance caractéristique est un sel constitué de cations et d'anions, particulièrement de préférence un sel inorganique.

3. Caractéristique de sécurité selon la revendication 1 ou 2, cependant que la substance caractéristique est partiellement soluble dans l'eau, c-à-d. que la solubilité dans l'eau à 20°C est supérieure à 2 mg par litre d'eau, de préférence supérieure à 5 mg par litre d'eau, particulièrement de préférence supérieure à 20 mg par litre d'eau, et est éventuellement instable vis-à-vis de solutions aqueuses d'acides et/ou de bases.

4. Caractéristique de sécurité selon une des revendications de 1 à 3, cependant que la substance caractéristique est instable vis-à-vis de solutions aqueuses d'acides et/ou de bases et que l'instabilité vis-à-vis de solutions aqueuses d'acides et/ou de bases est définie suivant les tests (a) ou (b) suivants, et que la substance stabilisant la substance caractéristique possède au moins la même instabilité vis-à-vis de solutions aqueuses d'acides et/ou de bases :

   test (a), concernant une substance caractéristique instable vis-à-vis de solutions aqueuses d'acides : un substrat en papier contenant 10 mg de substance caractéristique ou revêtu de la substance caractéristique est immergé pendant 40 minutes à température ambiante dans 1 litre d'une solution 0,5 molaire d'acide chlorhydrique, cependant qu'au moins 25 %, de préférence au moins 50 %, particulièrement de préférence au moins 90 % du signal de caractéristique ou de l'intensité de caractéristique doivent se perdre ;
   test (b), concernant une substance caractéristique instable vis-à-vis de solutions aqueuses de bases : un substrat en papier contenant 10 mg de substance caractéristique ou revêtu de la substance caractéristique est immergé pendant 40 minutes à température ambiante dans 1 litre d'une solution 0,5 molaire de NaOH, cependant qu'au moins 25 %, de préférence au moins 50 %, particulièrement de préférence au moins 90 % du signal de caractéristique ou de l'intensité de caractéristique doivent se perdre.

5. Caractéristique de sécurité selon une des revendications de 1 à 4, cependant que la substance stabilisant la substance caractéristique est chimiquement instable vis-à-vis de solutions aqueuses d'acides et/ou de bases , ou présente une solubilité d'au moins 50 % supérieure, en outre de préférence une solubilité d'au moins 100 % supérieure, particulièrement de préférence une solubilité d'au moins 1000 % supérieure dans l'eau à celle de la substance caractéristique.

6. Caractéristique de sécurité selon une des revendications de 1 à 5, cependant que la substance caractéristique est une substance luminescente, une substance éléctroluminescente, une substance magnétique ou un absorbeur NIR.

7. Caractéristique de sécurité selon la revendication 6, cependant que la substance caractéristique est une substance luminescente à base d'un réseau hôte inorganique dopé avec des ions de terres rares ou avec des ions de métaux de transition.

8. Caractéristique de sécurité selon la revendication 6 ou 7, cependant que la substance caractéristique luminescente émet dans la plage spectrale infrarouge, de préférence dans une zone de longueurs d'onde comprise entre 700 nm et 3000 nm.

9. Caractéristique de sécurité selon une des revendications de 1 à 8, cependant que la substance caractéristique présente une taille de grain (D99) inférieure à 20 $\mu$m, de préférence inférieure à 12 $\mu$m, particulièrement de préférence inférieure à 5 $\mu$m.

10. Caractéristique de sécurité selon une des revendications de 1 à 9, cependant que le composant stabilisant a au plus la même taille de grain D99 que la substance caractéristique, de préférence une taille de grain inférieure d'au moins 10 %, de préférence d'au moins 20 %, particulièrement de préférence d'au moins 50 % à la taille de grain D99 de la substance caractéristique.

11. Caractéristique de sécurité selon une des revendications de 1 à 10, cependant que la substance caractéristique inorganique chimiquement instable contient en tant que cations des cations alcalins et/ou des cations alcalino-terreux.

**12.** Caractéristique de sécurité selon la revendications de 11, cependant que la substance stabilisant la substance caractéristique contient en tant que cations des cations alcalins et/ou des cations alcalino-terreux, de préférence les mêmes cations alcalins et/ou cations alcalino-terreux que la substance caractéristique.

**13.** Caractéristique de sécurité selon une des revendications de 1 à 12, cependant que la substance caractéristique inorganique chimiquement instable contient en tant qu'anions des sulfates, phosphates, tungstates, molybdates, chromates, titanates, stannates ou silicates.

**14.** Caractéristique de sécurité selon la revendications de 13, cependant que la substance stabilisant la substance caractéristique contient en tant qu'anions des sulfates, phosphates, tungstates, molybdates, chromates, titanates, stannates ou silicates, de préférence les mêmes anions que la substance caractéristique.

**15.** Caractéristique de sécurité selon une des revendications de 1 à 14, cependant que la substance stabilisante, relativement à la substance caractéristique, se trouve dans un rapport pondéral d'au moins 0,5 à 1, de préférence d'au moins 1 à 1, en outre de préférence d'au moins 2 à 1, particulièrement de préférence d'au moins 10 à 1.

**16.** Caractéristique de sécurité selon une des revendications de 1 à 15, cependant que la surface des particules de la substance stabilisante, relativement à la surface des particules de la substance caractéristique dans la caractéristique de sécurité, s'élève à au moins 0,5 à 1, de préférence à au moins 1 à 1, en outre de préférence à moins 10 à 1, particulièrement de préférence à moins 100 à 1.

**17.** Document de valeur, en particulier billet de banque, comprenant la caractéristique de sécurité selon une des revendications de 1 à 16.

**18.** Document de valeur selon la revendication 17, cependant que le document de valeur est basé sur un substrat en papier et que la caractéristique de sécurité est incorporée dans la pâte à papier, de préférence répartie de manière homogène dans le substrat en papier.

**19.** Document de valeur selon la revendication 17, cependant que la caractéristique de sécurité se trouve localisée à un endroit déterminé du document de valeur, par exemple par encastrement dans un élément de sécurité déterminé tel qu'une fibre chinée, un fil de sécurité, un ruban de sécurité ou un patch de sécurité, ou par impression du document de valeur avec une encre d'impression contenant la caractéristique de sécurité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004063217 A1
- DE 102009056634 A1
- DE 102014011383 A1